# EUROPÄISCHE PATENTANMELDUNG

(11) **EP 3 974 151 A1**
(43) Veröffentlichungstag der Anmeldung: **30.03.2022**
(21) Anmeldenummer: 20198670.0
(22) Anmeldetag: 28.09.2020
(51) Int. Cl.: B29C 48/92, B29C 48/37, B29C 48/695

(54) **EINRICHTUNG UND VERFAHREN ZUR STEUERUNG DER ZUFUHR VON POLYMERSCHMELZE ZU EINER KUNSTSTOFFVERARBEITUNGSMASCHINE**

(71) Anmelder: Feddem GmbH & Co. KG, 53489 Sinzig (DE)
(72) Erfinder: Groß, Dieter, 64319 Pfungstadt (DE); Jost, Sebastian, 64646 Heppenheim (DE); Stuber, Andreas, 53498 Bad Breisig (DE)
(74) Vertreter: Meyer, Ludgerus

(57) **Zusammenfassung**

Die Erfindung betrifft eine Einrichtung und ein Verfahren zur Steuerung der Zufuhr von aus einem Extruder ausgetragener Polymerschmelze zu einer Kunststoff-Verarbeitungsmaschine, welche aus wenigstens zwei Teileinheiten (1, 2) gebildet ist, denen die aus dem Extruder ausgetragene Polymerschmelze über einen dem Extruder nachgeschalteten Verteiler (13) zur Aufteilung der Polymerschmelze in der Anzahl der Teileinheiten entsprechende Teilströme zugeführt wird. Erfindungsgemäß werden die Teilströme jeweils mittels einer Zahnradpumpe (11, 12) einer Teileinheit zugeführt. Die den im Wesentlichen gleich ausgebildeten Teileinheiten (1, 2) zugeführten Volumenströme sind durch Steuerung der Antriebsdrehzahl der jeweiligen Zahnradpumpe (11, 12) in Abhängigkeit von Betriebsparametern und/oder der Ausstattung der jeweiligen Teileinheit (1, 2) jeweils gesondert steuerbar oder regelbar. (Fig. 1)

## Beschreibung

Die Erfindung betrifft eine Einrichtung zur Steuerung der Zufuhr von aus einem Extruder ausgetragener Polymerschmelze zu einer Kunststoffverarbeitungsmaschine nach dem Oberbegriff des Anspruchs 1 sowie ein Verfahren zur Steuerung der Verteilung einer aus einem Extruder ausgetragenen Polymerschmelze auf wenigstens zwei Teileinheiten einer Kunststoffverarbeitungsmaschine nach dem Oberbegriff des Anspruchs 10.

Kunststoffverarbeitungsmaschinen werden in der Regel aus einem Extruder gespeist, der einen Polymerstrang ausgibt, der zur Weiterverarbeitung und Produkterzeugung der Kunststoffverarbeitungsmaschine zugeführt wird, in der Strangprodukte, wie Rohre, Folien, Stangen oder dergleichen ausgebildet werden. Eine Kunststoffverarbeitungsmaschine kann für manche Einsatzzwecke auch mehrere Düsenköpfe enthalten, z.B. zur Herstellung von Mehrschichtfolien. Dazu wird der aus dem Extruder austretende Polymerstrang über einen Verteiler in mehrere Teilströme aufgeteilt, die den voneinander getrennten Düsenköpfen zugeführt werden. Hierbei ist es möglich, die Teilströme abhängig von dem erforderlichen Durchsatz in den Düsenköpfen individuell einzustellen. Dazu können dem Verteiler Zahnradpumpen nachgeschaltet werden, deren Antriebsgeschwindigkeit einstellbar ist. Zahnradpumpen verringern in der Regel die vorhandene Pulsation des Extruders und übernehmen den Aufbau des benötigten Förderdrucks für die Kunststoffverarbeitungsmaschine. Abhängig von der Viskosität der Kunststoffschmelze können Zahnradpumpen auf unterschiedliche Weise betrieben werden, um einen möglichst hohen volumetrischen Wirkungsgrad zu erreichen.

Bekannte entsprechende Einrichtungen arbeiten nach geeigneter Voreinstellung auf statische Weise.

Aus der EP 3 470 196 A1 sind eine Einrichtung und ein Verfahren zur Imprägnierung von Faserbündeln mit einer Polymerschmelze bekannt, bei der die aus einem Extruder ausgetragene Polymerschmelze wenigstens zwei Teileinheiten einer Imprägniereinheit zugeführt wird, in der die eingeführte Faserstränge mit Polymerschmelze imprägniert werden. In jeder Teileinheit wird parallel zueinander eine Vielzahl von Fasersträngen imprägniert. Die Zahl der Faserstränge pro Teileinheit kann variieren. Ferner können die Faserstränge unterschiedliche chemische oder physikalische Eigenschaften haben, die eine variable ständige dynamische Anpassung der den Teileinheiten zugeführten Polymerstränge an die Eigenschaften der Faserstränge und die aktuellen Bearbeitungsparameter während der Imprägnierung erfordern.

Der Erfindung liegt daher die Aufgabe zugrunde, eine Einrichtung zur Steuerung der Zufuhr von aus einem Extruder ausgetragener und über einen Verteiler aufgeteilter Polymerschmelze zu einer Kunststoffverarbeitungsmaschine anzugeben, welche es ermöglicht, die Betriebsparameter der Teileinheiten der Kunststoffverarbeitungsmaschine flexibel einzustellen und dynamisch zu regeln.

Der Erfindung liegt weiterhin die Aufgabe zugrunde, ein Verfahren zur Steuerung der Verteilung einer aus einem Extruder ausgetragenen Polymerschmelze auf wenigstens zwei Teileinheiten einer Kunststoffverarbeitungsmaschine zur Imprägnierung von Reihen von Fasersträngen anzugeben, bei dem die Zufuhr der Polymerschmelze zu den Teileinheiten in Abhängigkeit von Betriebsparametern der jeweiligen Teileinheit variabel und dynamisch regelbar ist.

Diese Aufgaben werden durch die in den Ansprüchen 1 bzw. 10 angegebene Erfindung gelöst. Weiterbildende Ausführungsformen der Erfindung sind in Unteransprüchen angegeben.

Die erfindungsgemäße Einrichtung geht aus von einer Einrichtung zur Steuerung der Zufuhr von aus einem Extruder ausgetragener Polymerschmelze zu einer Kunststoff-Verarbeitungsmaschine. Diese enthält wenigstens zwei Teileinheiten, denen die aus dem Extruder ausgetragene Polymerschmelze über einen dem Extruder nachgeschalteten Verteiler zur Aufteilung der Polymerschmelze in eine Anzahl von Teilströmen zugeführt wird, die der Anzahl der Teileinheiten entspricht.

Erfindungsgemäß werden die Teilströme jeweils mittels einer Zahnradpumpe den Teileinheiten zugeführt, wobei die den im Wesentlichen gleich ausgebildeten Teileinheiten zugeführten Volumenströme durch Steuerung der Antriebsdrehzahl der jeweiligen Zahnradpumpe in Abhängigkeit von Betriebsparametern und/oder der Ausstattung der jeweiligen Teileinheit jeweils gesondert steuerbar oder regelbar sind.

Durch die Verwendung von Zahnradpumpen für jede Teileinheit einer Kunststoffverarbeitungsmaschine lässt sich eine präzise, aber variable Steuerung der Zufuhr von Polymerschmelze zu den Teileinheiten erreichen. Die Zufuhrmenge und der Druck lassen sich über die Feststellung verschiedener Parameter in den Teileinheiten steuern, indem die Drehzahl der Zahnradpumpen für jede Teileinheit abhängig von den erfassten Parametern gesondert gesteuert wird.

Bei den erfassten Parametern handelt es sich vorzugsweise um die Art, die Temperatur und den Druck der Polymerschmelze, die den Zahnradpumpen zugeführt wird, der Temperatur im Arbeitsraum der Teileinheiten, dem Füllgrad und dem Druck in der jeweiligen Teileinheit und den Eigenschaften der in derjeweiligen Teileinheit zu verarbeitenden Produkte.

Vorzugsweise wird der Druck in der jeweiligen Teileinheit auf einen voreingestellten Sollwert geregelt.

Die Erfindung findet vorzugsweise Anwendung bei einer Kunststoffverarbeitungsmaschine zur Imprägnierung von Faserbündeln mit aus einem Extruder ausgetragenem Kunststoff-Polymer, wobei die Kunststoffverarbeitungsmaschine wenigstens zwei parallel betriebene Teileinheiten für eine gleiche oder unterschiedliche Zahl von Faserbündeln enthält.

Kunststoffverarbeitungsmaschinen der vorgenannten Art dienen dazu, Bündel von Endlosfasern mit Kunststoff-Polymer zu imprägnieren, die imprägnierten Stränge dann in Pellets zu teilen und diese Folge-Einrichtungen zur Herstellung von hochfesten Strangprodukten oder Formteilen zuzuführen. Eine Kunststoffverarbeitungsmaschine mit mehreren Teileinheiten erlaubt es dabei, die Teileinheiten unabhängig voneinander zu betreiben, insbesondere mit einer unterschiedlichen Zahl von Faserbündeln, unterschiedlicher Dichte und Art der Fasern, unterschiedlichen Bearbeitungsparametern und unterschiedlichen Temperaturen. Die über Sensoren erfassten Parameter oder Einstellwerte der Teileinheiten werden vorzugsweise einer Steuer- und Regeleinheit zugeführt, über die ein Stellwert zur Einstellung der Antriebsdrehzahl der den Teileinheiten zugeordneten Zahnradpumpen ermittelt wird.

Anstelle von Zahnradpumpen können auch ähnliche Arten von Pumpen, vorzugsweise Schnecken- oder Schraubenpumpen verwendet werden.

Um bei niedrigen Abgabedrücken des zur Herstellung der Polymerschmelze verwendeten Extruders am Eingang des Verteilers zur Aufteilung der Polymerschmelze auf die verwendeten Zahnradpumpen einen ausreichenden Zufuhrdruck zu erreichen, wird dem Verteiler vorzugsweise eine Druckerhöhungspumpe vorgeschaltet, mit der der Eingangsdruck aller Zahnradpumpen gleichmäßig erhöht werden kann und außerdem Druckverluste im Verteiler, den Zahnradpumpen und Rohrleitungen zwischen Extruder und Verteiler ausgeglichen werden können.

Vorzugsweise enthalten die Zahnradpumpen jeweils eine gegebenenfalls drosselbare Bypassverbindung zwischen Ein- und Auslass, über die ein Teil der Polymerschmelze unter Umgehung des Durchlasses unmittelbar den Teileinheiten der Kunststoffverarbeitungsmaschine zugeführt wird.

Vorzugsweise lassen sich die Zahnradpumpen alternativ als Pumpen mit negativer oder positiver Druckdifferenz zwischen Eingang und Ausgang betreiben. Zur entsprechenden Umrüstung der Zahnradpumpen lassen sich deren Wellenlager tauschen, wodurch ein darin ausgebildeter Rückfluss entweder der Zufuhrseite oder der Abflussseite der Pumpe zugeordnet wird.

Die Erfindung betrifft auch ein Verfahren zur Steuerung der Verteilung einer aus einem Extruder ausgetragenen Polymerschmelze auf wenigstens zwei Teileinheiten einer Kunststoffverarbeitungsmaschine zur Imprägnierung von Reihen von parallel zueinander die Imprägnierkammern der Teileinheiten durchlaufenden Fasersträngen, bei dem die Faserstränge bei ihrem Durchlauf durch die Imprägnierkammern mit der zugeführten Polymerschmelze imprägniert werden.

Erfindungsgemäß wird die aus dem Extruder ausgetragene Polymerschmelze mittels eines Verteilers auf wenigstens zwei Teilströme aufgeteilt, welche jeweils mittels einer Zahnradpumpe den Teileinheiten zugeführt werden, wobei die Antriebsdrehzahl der Zahnradpumpen in Abhängigkeit von Betriebsparametern der jeweiligen Teileinheiten dynamisch geregelt wird.

Vorzugsweise wird die Antriebsdrehzahl der jeweiligen Zahnradpumpe derart geregelt, dass ein Soll-Betriebsdruck in der Imprägnierkammer der jeweiligen Teileinheit konstant gehalten wird.

Die Antriebsdrehzahl der jeweiligen Zahnradpumpe wird vorzugsweise durch Ermittlung eines oder mehrerer Betriebs-Parameter der Teileinheiten bestimmt, welche ausgewählt sind aus den Parametern der Temperatur der Imprägnierkammern der Teileinheiten, der Temperatur der den Zahnradpumpen zugeführten Volumenströme, dem Füllgrad der Teileinheiten, dem Druck der den Teileinheiten zugeführten Volumenströme, den Eigenschaften und der Anzahl der Faserbündel pro Teileinheit, der Abzugsgeschwindigkeiten der Faserbündel aus den Teileinheiten, sowie den physikalischen oder chemischen Eigenschaften der Polymerschmelze.

Die Erfindung wird nachstehend anhand eines Ausführungsbeispiels für zwei Teileinheiten näher erläutert. Es zeigen:
- Fig. 1: eine vereinfachte perspektivische Ansicht einer Kunststoffverarbeitungsmaschine mit Schmelzezuführung,
- Fig. 2: eine Unteransicht einer Maschine gemäß Figur 1,
- Fig. 3: eine Vorderansicht einer Maschine gemäß Figur 1

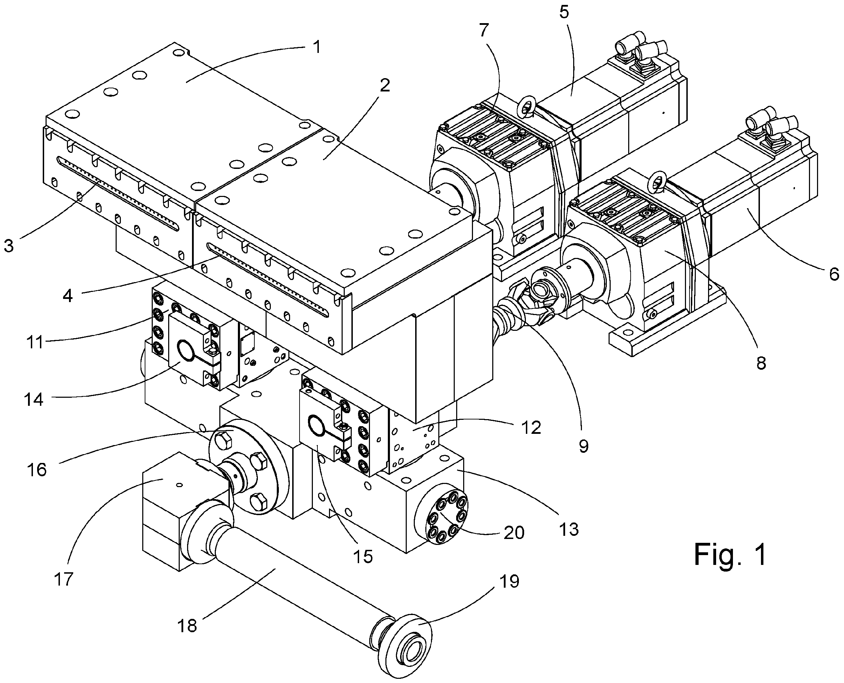

Die in Figur 1 dargestellte Kunststoffverarbeitungsmaschine dient der Imprägnierung von Fasersträngen mit Kunststoffpolymer. Die Faserbündel werden parallel zueinander in einen Spalt der Maschine eingeführt, und bei ihrem Durchlauf durch den Spalt mit Kunststoffpolymer durchtränkt. Die Maschine enthält zwei Teileinheiten 1 und 2, die parallel zueinander angeordnet sind und im Wesentlichen unabhängig voneinander betrieben werden können. Eine derartige Kunststoffverarbeitungsmaschine ist in der EP 3470196 A1 offenbart, auf deren Inhalt Bezug genommen wird.

Die Erfindung ist nicht auf eine Verwendung an zwei Teileinheiten beschränkt, sondern umfasst auch eine größere Zahl von Teileinheiten. Die Erfindung eignet sich ferner für eine Vielzahl von Kunststoffen, wie Polymeren, insbesondere Polyamide (PA), Polyolefine (PP), Polyester und weitere technische Kunststoffe.

In Fig. 1 weist die Teileinheit 1 einen Düsenauslass 3 und die Teileinheit 2 einen Düsenauslass 4 auf, aus denen die imprägnierten Faserbündel die Teileinheiten verlassen.

Die den Teileinheiten zuzuführende Polymerschmelze wird von einem nicht dargestellten Extruder geliefert. Über einen Flansch 19, die Rohrleitung 18, eine Umlenkung 17 und einen Flansch 16 gelangt die Polymerschmelze in einen Verteiler 13, in dem sie auf zwei Teilströme aufgeteilt wird, die in zwei mit dem Verteiler verbundene Zahnradpumpen einläuft. Der Verteiler 13 ist ein passiver Verteiler, der zugeleitete Schmelze aufteilt und getrennten Ausgängen zuführt, an die Förderpumpen angeschlossen sind. Zur Wartung verfügt der Verteiler über Revisionsdeckel 20 und 21.

Die an den Ausgängen des Verteilers 13 angeschlossenen Zahnradpumpen 11 und 12 werden über Motorantriebe mit Elektromotoren 5, 6 und Getrieben 7, 8 angetrieben. Zum Ausgleich von Befestigungstoleranzen oder zur örtlichen Anpassung können die Motorantriebe Kardanwellen 9 und 10 enthalten, über die die Zahnradpumpen 11 und 12 angetrieben werden.

Zur Kühlung der Wellen 22 und 23 der Zahnradpumpen weisen diese vorderseitige Kühldichtungen 14 und 15 auf, die als flüssigkeitsgekühlte Wellendichtungen ausgebildet ist.

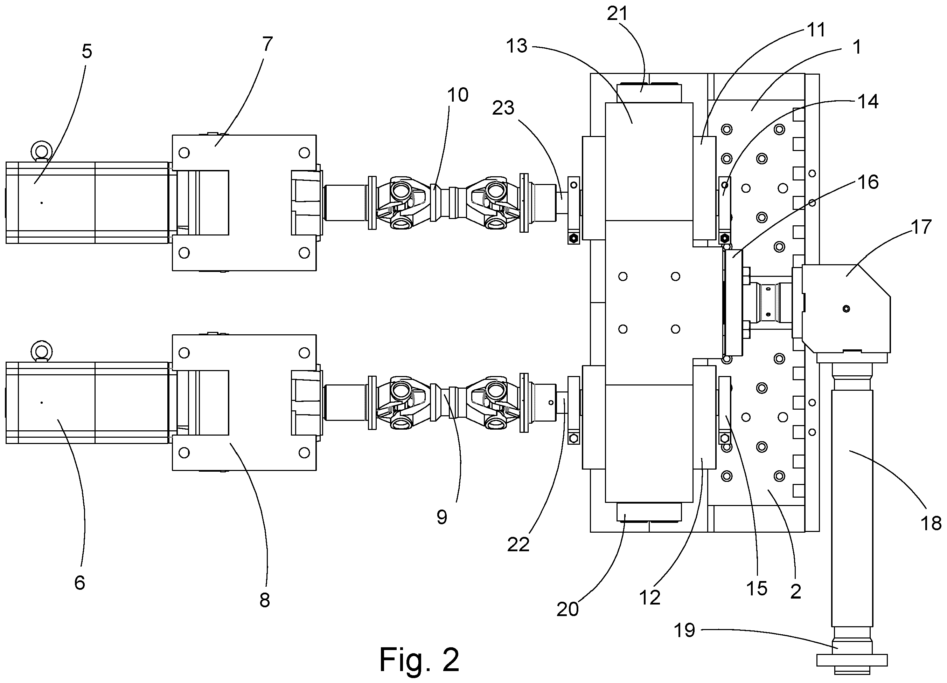

Figur 2 zeigt eine Unteransicht der erfindungsgemäßen Einrichtung, die die Anordnung des Verteilers 13 unterhalb der beiden Teileinheiten der Kunststoffverarbeitungsmaschine zeigt.

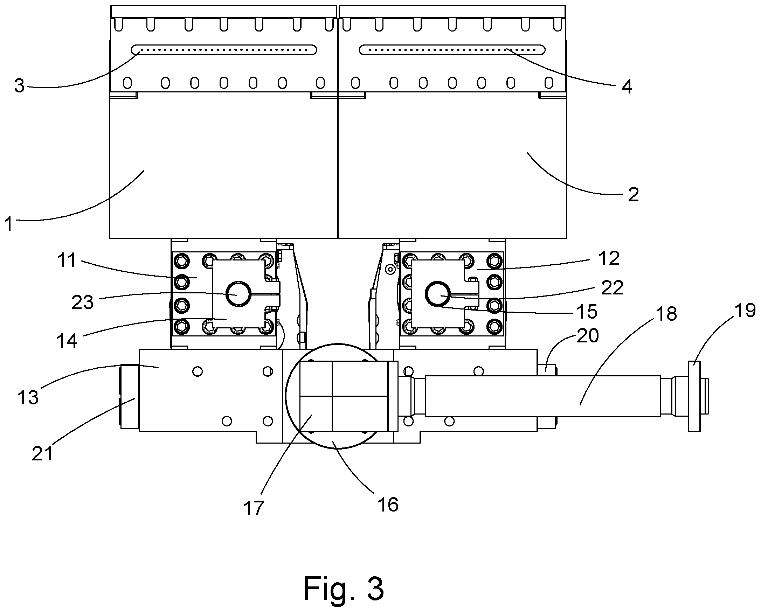

In Figur 3 ist eine Vorderansicht der Einrichtung dargestellt. Die Figur zeigt den kompakten Aufbau, bei dem der Verteiler 13, die Zahnradpumpen 11 und 12 und die Teileinheiten 1 und 2 der Kunststoffverarbeitungsmaschine unmittelbar auf kurzem Weg zusammengeschaltet sind, um den Weg der Polymerschmelze so klein wie möglich zu halten.

Zur Regelung der Antriebsdrehzahl der Zahnradpumpen, die vorzugsweise zwischen 5 und 150 UpM liegt, ist eine nicht dargestellte Steuer- und Regeleinheit vorgesehen, die mit einer Reihe von Sensoren in Verbindung steht, die in dem Verteiler, den Zahnradpumpen und den Teileinheiten angeordnet sind, um insbesondere die Arbeitsdrücke, die Temperaturen und relevante Eigenschaften der zu verarbeitenden Produkte zu erfassen und dort das Fördervolumen der Pumpen und den Druck zu regeln. Des Weiteren können an der Steuer- und Regeleinheit Sollwerte und Festparameter der Art und Menge der jeweils zu verarbeitenden Produkte eingestellt werden.

### Bezugszeichen

- 1: Teileinheit
- 2: Teileinheit
- 3: Düsenauslass
- 4: Düsenauslass
- 5: Elektromotor
- 6: Elektromotor
- 7: Getriebe
- 8: Getriebe
- 9: Kardanwelle
- 10: Kardanwelle
- 11: Zahnradpumpe
- 12: Zahnradpumpe
- 13: Verteiler
- 14: Kühldichtung
- 15: Kühldichtung
- 16: Flansch
- 17: Umlenkung
- 18: Rohrleitung
- 19: Flansch
- 20: Revisionsdeckel
- 21: Revisionsdeckel
- 22: Welle
- 23: Welle

## Patentansprüche

1. Einrichtung zur Steuerung der Zufuhr von aus einem Extruder ausgetragener Polymerschmelze zu einer Kunststoff-Verarbeitungsmaschine, welche aus wenigstens zwei Teileinheiten (1, 2) gebildet ist, denen die aus dem Extruder ausgetragene Polymerschmelze über einen dem Extruder nachgeschalteten Verteiler (13) zur Aufteilung der Polymerschmelze in der Anzahl der Teileinheiten entsprechende Teilströme zugeführt wird, **dadurch gekennzeichnet, dass** die Teilströme jeweils mittels einer Zahnradpumpe (11, 12) einer Teileinheit zugeführt werden und dass die den im Wesentlichen gleich ausgebildeten Teileinheiten (1, 2) zugeführten Volumenströme durch Steuerung der Antriebsdrehzahl der jeweiligen Zahnradpumpe (11, 12) in Abhängigkeit von Betriebsparametern und/oder der Ausstattung der jeweiligen Teileinheit (1, 2) jeweils gesondert steuerbar oder regelbar sind.

2. Einrichtung nach Anspruch 1, **dadurch gekennzeichnet, dass** die Betriebsparameter wenigstens ausgewählt sind aus der Art und der Temperatur der der jeweiligen Zahnradpumpe (11, 12) zugeführten Polymerschmelze, der Temperatur im Arbeitsraum der Teileinheiten (1, 2), dem Füllgrad und Druck in der jeweiligen Teileinheit und den Eigenschaften der in der jeweiligen Teileinheit zu verarbeitenden Produkte.

3. Einrichtung nach Anspruch 2, **dadurch gekennzeichnet, dass** die Volumenströme derart gesteuert werden, dass der Druck in der jeweiligen Teileinheit auf einen voreingestellten Sollwert geregelt wird.

4. Einrichtung nach Anspruch 1, **dadurch gekennzeichnet, dass** die Kunststoffverarbeitungsmaschine eine Einrichtung zur Imprägnierung von Faserbündeln mit aus einem Extruder ausgetragenem Kunststoff-Polymer ist, wobei die Einrichtung wenigstens zwei parallel betriebene Teileinheiten (1, 2) für eine gleiche oder unterschiedliche Anzahl oder Art von Faserbündeln ausgebildet ist.

5. Einrichtung nach Anspruch 4, **dadurch gekennzeichnet, dass** die Teileinheiten (1, 2) jeweils Sensoren zur Erfassung eines oder mehrerer Betriebs-Parameter enthalten, ausgewählt wenigstens aus Sensoren zur Erfassung der Temperatur der Imprägnierkammern der Teileinheiten (1, 2), der Temperatur der Volumenströme, dem Füllgrad der Teileinheiten (1, 2), dem Druck der den Teileinheiten (1, 2) zugeführten Volumenströme, den Eigenschaften und der Anzahl der Faserbündel pro Teileinheit, der Abzugsgeschwindigkeiten der Faserbündel aus den Teileinheiten (1, 2), den Eigenschaften der Polymerschmelze, und dass die erfassten Betriebsparameter einer Steuer- und Regeleinheit zugeführt werden, über die die Antriebsdrehzahl der jeweiligen Zahnradpumpen (11, 12) dynamisch eingestellt wird.

6. Einrichtung nach Anspruch 1, **dadurch gekennzeichnet, dass** die Zahnradpumpen (11, 12) als Schnecken- oder Schraubenpumpen ausgebildet sind.

7. Einrichtung nach Anspruch 1, **dadurch gekennzeichnet, dass** zwischen Extruder und Verteiler eine Druckerhöhungspumpe eingeschaltet ist, mittels der im Verteiler (13), an Zahnradpumpen (11, 12) und Rohrleitungen (18) entstehende Druckverluste der Polymerschmelze ausgeglichen werden können.

8. Einrichtung nach Anspruch 1, **dadurch gekennzeichnet, dass** die Zahnradpumpen (11, 12) eine Bypassverbindung zwischen Ein- und Auslass aufweisen, über die ein Teil der zugeführten Polymerschmelze unter Umgehung des Pumpendurchlasses unmittelbar den Teileinheiten (1, 2) der Kunststoffverarbeitungsmaschine zugeführt wird.

9. Einrichtung nach Anspruch 4, **dadurch gekennzeichnet, dass** die Zahnradpumpen (11, 12) durch Wechsel der Zahnradlagerung unter Bezug auf den Arbeitsdruck der Teileinheiten (1, 2) als Druckerhöhungspumpen mit positiver oder negativer Druckdifferenz zwischen Ein- und Auslass betrieben werden können.

10. Verfahren zur Steuerung der Verteilung einer aus einem Extruder ausgetragenen Polymerschmelze auf wenigstens zwei Teileinheiten (1, 2) einer Kunststoffverarbeitungsmaschine zur Imprägnierung von Reihen von parallel zueinander Imprägnierkammern der Teileinheiten (1, 2) durchlaufenden Fasersträngen, bei dem die Faserstränge bei ihrem Durchlauf durch die Imprägnierkammern mit der zugeführten Polymerschmelze imprägniert werden, **dadurch gekennzeichnet, dass** die aus dem Extruder ausgetragene Polymerschmelze mittels eines Verteilers (13) auf wenigstens zwei Teilströme aufgeteilt wird, welche jeweils mittels einer Zahnradpumpe den Teileinheiten (1, 2) zugeführt werden, wobei die Antriebsdrehzahl der Zahnradpumpen (11, 12) in Abhängigkeit von Betriebsparametern der jeweiligen Teileinheiten (1, 2) dynamisch geregelt wird.

11. Verfahren nach Anspruch 10, **dadurch gekennzeichnet, dass** die Antriebsdrehzahl der jeweiligen Zahnradpumpe derart geregelt ist, dass ein Soll-Betriebsdruck in der Imprägnierkammer der jeweiligen Teileinheit konstant gehalten wird.

12. Verfahren nach Anspruch 10, **dadurch gekennzeichnet, dass** die Antriebsdrehzahl der jeweiligen Zahnradpumpe durch Ermittlung eines oder mehrerer Betriebs-Parameter der Teileinheiten (1, 2) bestimmt wird, welche ausgewählt sind aus den Parametern der Temperatur der Imprägnierkammern der Teileinheiten (1, 2), der Temperatur der Volumenströme, dem Füllgrad der Teileinheiten (1, 2), dem Druck der den Teileinheiten zugeführten Volumenströme, den Eigenschaften und der Anzahl der Faserbündel pro Teileinheit, der Abzugsgeschwindigkeiten der Faserbündel aus den Teileinheiten (1, 2), sowie den physikalischen oder chemischen Eigenschaften der Polymerschmelze.

13. Verfahren nach Anspruch 10, **dadurch gekennzeichnet, dass** die Zahnradpumpen (11, 12) als Schnecken- oder Schraubenpumpen ausgebildet sind.
